# EUROPEAN PATENT APPLICATION

(11) **EP 4 692 751 A1**
(43) Date of publication of application: **11.02.2026**
(21) Application number: 24780799.3
(22) Date of filing: 29.03.2024
(51) Int. Cl.: G01M 17/007, G06T 7/00

(54) **TEST SPECIMEN DISPLAY RECOGNITION DEVICE, TEST SPECIMEN TESTING SYSTEM, TEST SPECIMEN DISPLAY SETTING DEVICE, TEST SPECIMEN DISPLAY RECOGNITION METHOD, AND TEST SPECIMEN DISPLAY RECOGNITION PROGRAM**

(30) Priority: 31.03.2023 JP 2023057135
(71) Applicant: HORIBA, Ltd., Kyoto-shi Kyoto 601-8510 (JP)
(72) Inventor: KOMATSU, Yoji, Kyoto-shi, Kyoto 601-8510 (JP); MICHIKITA, Toshiyuki, Kyoto-shi, Kyoto 601-8510 (JP); YOSHINAKA, Yuji, Kyoto-shi, Kyoto 601-8510 (JP); PRASAD, Rohit Shiv, Kyoto-shi, Kyoto 601-8510 (JP); YABUSHITA, Hirotaka, Kyoto-shi, Kyoto 601-8510 (JP); MATSUEDA, Atsuo, Kyoto-shi, Kyoto 600-8815 (JP); OTAKE, Ryoga, Kyoto-shi, Kyoto 600-8815 (JP)
(74) Representative: Müller Hoffmann & Partner
(86) International application number: PCT/JP2024/013028
(87) International publication number: WO 2024/204704

(57) **Abstract**

The present invention provides a test specimen display recognition device that recognizes a test specimen display to indicate a state of a test specimen from an image of a meter panel of the test specimen captured by a camera, and the test specimen display recognition device comprises a setting information reception section that receives a selection signal indicating a type of an image recognition algorithm used to recognize the test specimen display from the image, a setting information storage section that stores the selection signal received by the setting information reception section as the setting information, and a test specimen display recognition section that acquires the setting information from the setting information storage section and recognizes an indicated value indicated by the test specimen display based on the setting information.

## Description

### Technical field

This invention relates to a test specimen display recognition device, a test specimen testing system, a test specimen display setting device, a test specimen display recognition method and test specimen display recognition program.

### Background Technology

As shown in the patent document 1, as this type of a test specimen display recognition device represented is to recognize a test specimen display that indicates a state of the test specimen based on a captured image of a meter panel of the test specimen, which is a vehicle or a part thereof. The test specimen display recognition device recognizes the test specimen display such as a meter, a warning light, or an indicator light on the meter panel based on a captured image of the meter panel of the test specimen and a known data stored in a data storage section in advance.

### Prior art documents

### Patent documents

Patent document 1: WO2020/111192

### Summary of Invention

### Problem to be solved by the invention

The above-mentioned test specimen display recognition device recognizes a position or a type of the test specimen display by the use of the image of the meter panel (hereinafter, all-lit image) in a state wherein all of the test specimen displays are lit by making use of that all of the test specimen displays of the meter panel are lit at a time of starting the test specimen.

However, the above-mentioned test specimen display recognition device recognizes all of the test specimen display at once using all-lit images, and it is necessary to prepare template images of all-lit images according to a type of test specimen, however, in case that no template image exists, it is not possible to recognize the test specimen display. In addition, it is difficult to recognize the test specimen display that changes according to a state of the test specimen such as pointers, gauges or characters just by comparing the template image and the all-lit image. Furthermore, if an image in which a part of the test specimen display is not lit is used, it is difficult to recognize a position or a type of the test specimen display that is not lit.

Therefore, the present invention is made in view of the above-mentioned problems, and a main subject of this invention is to easily set up an image recognition algorithm according to the test specimen display to be recognized, and to accurately recognize an indicated value indicated by the test specimen display on the meter panel.

### Means to solve the problem

More specifically, a test specimen display recognition device in accordance with this invention is a test specimen display recognition device that recognizes a test specimen display to indicate a state of a test specimen from an image of a meter panel of the test specimen, which is a vehicle or a part of the vehicle, captured by a camera, and that is characterized by comprising a setting information reception section that receives a selection signal indicating a type of an image recognition algorithm used to recognize the test specimen display from the image, a setting information storage section that stores the selection signal received by the setting information reception section as the setting information, and a test specimen display recognition section that acquires the setting information from the setting information storage section and recognizes an indicated value indicated by the test specimen display based on the setting information.

In accordance with the test specimen display recognition device, it is possible for a user to select an appropriate image recognition algorithm tailored for each of the test specimen displays of the meter panel. Since the test specimen display recognition device then recognizes the test specimen display using the selected image recognition algorithm, it is possible to recognize each of the test specimen display of the meter panel easily and accurately. In addition, the present invention is to recognize each of the test specimen display of the meter panel individually. Unlike a conventional test specimen display recognition device, it is not necessary for the test specimen display recognition device to use an image of the meter panel in a state wherein all test specimen displays are lit, and it is possible to prevent misrecognition or omission of recognizing the test specimen display recognition device.

It is preferable that the setting information reception section further receives change information, which is information for recognizing a change in a state of the test specimen display stores the change information in the setting information storage section as the setting information, the test specimen display recognition section acquires the setting information from the setting information storage section and recognizes the indicated value indicated by the test specimen display based on the image recognition algorithm and the change information.

In accordance with this configuration, since the indicated value indicated by the test specimen display is recognized using the change information indicating the change in the state of the test specimen display, it is possible to recognize the indicated value more easily and accurately.

It is preferable that the setting information reception section receives information for recognizing the change in the state of a bar meter, a circle meter, character information, and/or graphic information as the change information, and the test specimen display recognition section acquires the setting information from the setting information storage section and recognizes the indicated value indicated by the test specimen display based on the image recognition algorithm and the change information.

In accordance with this configuration, it is possible for the test specimen display recognition section to recognize the indicated value of the bar meter, the indicated value of the circle meter, the character information, and/or graphic information more easily and accurately.

It is preferable that the setting information reception section receives a range designation signal indicating a range of the image specified by a user and stores the range designation signal in the setting information storage section, and the test specimen display recognition section recognizes the indicated value indicated by the test specimen display included in the range by using the image recognition algorithm.

In accordance with this configuration, since the image recognition algorithm is used in the range of the indicated image, it is possible to recognize the test specimen display more accurately than a case wherein the image recognition algorithm is used in a whole range of the image.

As a concrete mode of the test specimen display conceived is that the test specimen display is at least one or more of a circle meter, a bar meter, a character and a graphic.

It can be represented that the setting information reception section receives picture angle correction information, which is information for correcting a picture angle of the camera, and the test specimen display recognition device further comprises, a picture angle correction storage section that stores the picture angle correction information received by the setting information reception section, and an image correction section that corrects the picture angle based on the picture angle correction information stored in the picture angle correction storage section.

In accordance with this configuration, in case that the camera is replaced or test specimens of the same type are tested multiple times, since the setting to recognize the indicated value indicated by the test specimen display is conducted once and then it is possible to recognize the indicated value indicated by the test specimen just by adjusting the picture angle of the camera, distortion, a size, a position or an angle of the image, it is possible to omit a process of setting for recognizing the indicated value indicated by the test specimen.

In case of adjusting the picture angle, there is a case wherein the change of the picture angle is big such as, for example, replacing the camera. On the other hand, there is a case that a small change in the picture angle causes intermittently such as a case wherein the test specimen vibrates while, for example, the test specimen runs. In order to correct the picture angle accurately, it is preferable that the picture angle is corrected tailored to each case.

Accordingly, it is preferable that the picture angle has at least first picture angle correction information, which is one of the picture angle correction information and second picture angle correction information, which is picture angle correction information whose correction amount is smaller than that of the first picture angle correction information, and the image correction section corrects the picture angle based on the first picture angle correction information immediately after the test specimen display recognition section starts recognizing the test specimen display and corrects the picture angle based on the second picture angle correction information while the test specimen display recognition section is recognizing the test specimen display.

It is preferable to further comprise a mask processing section that performs mask processing to mask a predetermined area selected by a user from the captured image of the meter panel.

In accordance with this configuration, in case that the test specimen display recognition section recognizes the indicated value of the test specimen display, since the test specimen display recognition section recognizes the indicated value indicated by the test specimen display in an area other than the predetermined area where mask processing is provided, it becomes possible to recognize the indicate value indicated by the test specimen display more accurately.

Furthermore, a test specimen testing system in accordance with this invention is a test specimen testing system for testing a test specimen, which is a vehicle or a part of the vehicle, and is characterized by comprising a test facility that tests the test specimen, a camera that captures an image of a meter panel of the test specimen, the test specimen display recognition device, and a control device that controls the test facility based on the test specimen display recognized by the test specimen display recognition device.

In accordance with this test specimen testing system, it is possible to produce the same effect and operation as that of the above-mentioned test specimen display recognition device.

In addition, a test specimen display recognition method in accordance with this invention is a test specimen display recognition method that recognizes a test specimen display indicating a state of a test specimen from an image of a meter panel of the test specimen, which is a vehicle or a part of the vehicle, captured by a camera, and is characterized by receiving a selection signal indicating a type of an image recognition algorithm for recognizing the test specimen display from the image, storing setting information including the received selection signal, and recognizing an indicated value indicated by the test specimen display based on the setting information.

In accordance with this test specimen display recognition method, it is possible to produce the same effect and operation as that of the above-mentioned test specimen display recognition device.

Furthermore, a test specimen display recognition program in accordance with this invention is a test specimen display recognition program that is used for a test specimen display recognition device that recognizes a test specimen display indicating a state of a test specimen from an image of a meter panel of the test specimen, which is a vehicle or a part of the vehicle, captured by a camera and that makes a computer produce functions as a setting information reception section that receives a selection signal indicating a type of an image recognition algorithm to recognize the test specimen display from the image, a setting information storage section that stores the selection information that includes the selection signal received by the setting information reception section, and a test specimen display recognition section that acquires the setting information from the setting information storage section and recognizes an indicated value indicated by the test specimen display based on the setting information.

In accordance with this test specimen display recognition program, it is possible to produce the same effect and operation as that of the above-mentioned test specimen display recognition device.

### Effects of the Invention

In accordance with this invention having the above-mentioned configuration, it is possible to set the image recognition algorithm easily according to the test specimen display to be recognized, and to recognize the indicated values indicated by the test specimen display of the meter panel accurately.

### Brief description of the drawing

[Fig.1] A schematic diagram of a test specimen testing system in accordance with one embodiment of this invention.
[Fig.2] A functional block diagram of a test specimen display recognition device of the embodiment.
[Fig.3] A schematic diagram of an image output to a display by the test specimen display recognition device of the embodiment.
[Fig.4] A flowchart showing (a) a setting method of setting information and (b) a recognition method of the test specimen display.
[Fig. 5] A functional block diagram of a test specimen display recognition device in accordance with another embodiment.
[Fig. 6] A schematic diagram of an image output to the display by the test specimen display recognition device in case of setting pattern matching in accordance with another embodiment.
[Fig.7] A schematic diagram of an image output to the display by the test specimen display recognition device in case of setting recognition of a meter in accordance with another embodiment.
[Fig.8] A schematic diagram of the image output to the display by the test specimen display recognition device in accordance with another embodiment.

### Embodiments for carrying out the invention

One embodiment of a test specimen testing system using a test specimen display recognition device in accordance with this invention will be explained below with reference to drawings. For the sake of clarity, any of figures shown below may be schematically depicted by omitting or exaggerating as appropriate. Identical components will be marked with the same symbols and descriptions will be omitted as appropriate.

### <Device configuration>

The test specimen testing system 100 in accordance with this embodiment is for testing a test specimen (W), which is a vehicle or a part of the vehicle.

In this embodiment, the test specimen (W) may be a vehicle comprising an internal combustion engine, a hybrid vehicle, a plug-in hybrid vehicle, an electric vehicle, or a fuel cell vehicle or a part thereof. The test specimen (W) may be an ADAS vehicle or a part thereof having an advanced driver assistance system (ADAS) such as adaptive cruise control (ACC), or a vehicle (AD vehicle) or a part thereof having an automatic driving system (AD). In addition, the vehicle is not limited to a 4-wheeled vehicle and may be a 2-wheeled vehicle or any other vehicle. In addition, the test specimen (W) may also be a ship or an aircraft, or the like.

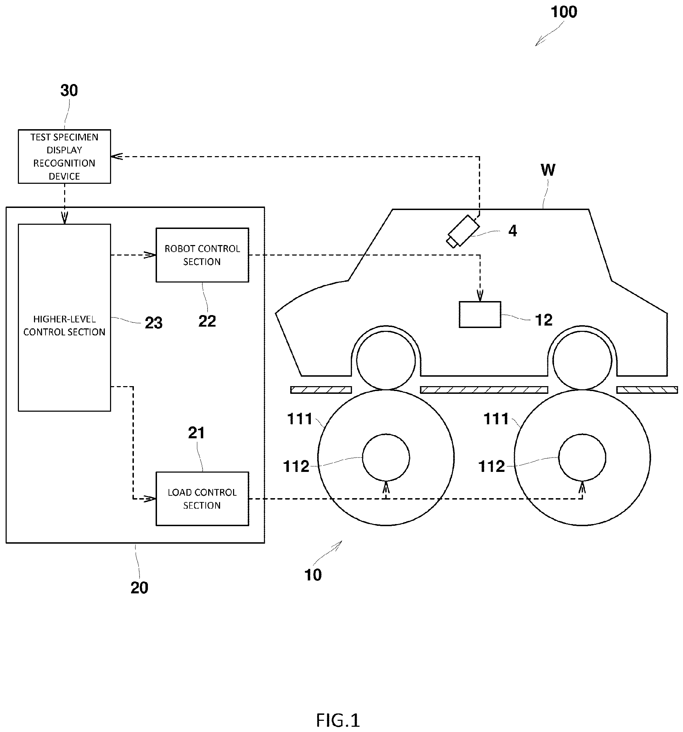

Concretely, the test specimen testing system 100 comprises, as shown in Fig. 1, a test facility 10 that conducts a test on the test specimen (W), a control device 20 that controls the test facility 10, a test specimen display recognition device 30 that recognizes a test specimen display (H) indicating a state of the test specimen (W) and a camera 4.

Each of the devices 10 ~ 30 is described below.

The test facility 10 comprises a dynamometer 11 for simulated driving of the test specimen (W) and an autonomous driving robot 12 that conducts brake operation, accelerator operation, steering wheel operation, button operation or shift operation of the test specimen (W).

The dynamometer 11 is a so-called chassis dynamometer, comprising a roller 111 on which a wheel of the test specimen (W) is placed and a load device 112 connected to the roller 111. The dynamometer 11 is not limited to a chassis dynamometer, however, it may also be a hub dynamometer that is connected to a rotating shaft of a wheel of the test specimen (W). In addition, the dynamometer 11 may be mounted on either one of a driving wheel and a driven wheel of the test specimen (W). Furthermore, the dynamometer 11 may be an engine dynamometer connected to a rotating shaft of an engine of the test specimen (W), a motor dynamometer connected to a rotating shaft of a motor of the test specimen (W) or a power train dynamometer to evaluate a power train.

The autonomous driving robot 12 is an actuator that operates a brake pedal, an accelerator pedal, a steering wheel, a button, or a shift of the test specimen (W), respectively. For example, in case that the test specimen (W) comprises the advanced driver assistance system (AD/ADAS), the autonomous driving robot 12 may link an active driving state in which the test specimen (W) is actively driven by the automatic driving system or the advanced driver assistance system (AD/ADAS) and a passive driving state in which the test specimen (W) is passively driven by conducting the brake operation, the accelerator operation or the steering wheel operation.

The control device 20 controls the test facility 10 so that the test specimen (W) can run in a predetermined running pattern. Concretely, the control device 20 is a computer comprising a CPU, an internal memory, an input/output interface and an A/D converter, or the like. The control device 20 comprises a load control section 21 that controls the dynamometer 11, a robot control section 22 that controls the autonomous driving robot 12, and a higher-level control section 23 that oversees and controls each of the load control section 21 and the control section 22. Each of the control sections may be included in a common computer or in multiple computers having their own functions.

Thus, the test specimen display recognition device 30 recognizes one or more test specimen displays (H) indicating the state of the test specimen (W) from a captured image of the meter panel (M) (including other displays such as displays provided by the test specimen (W).

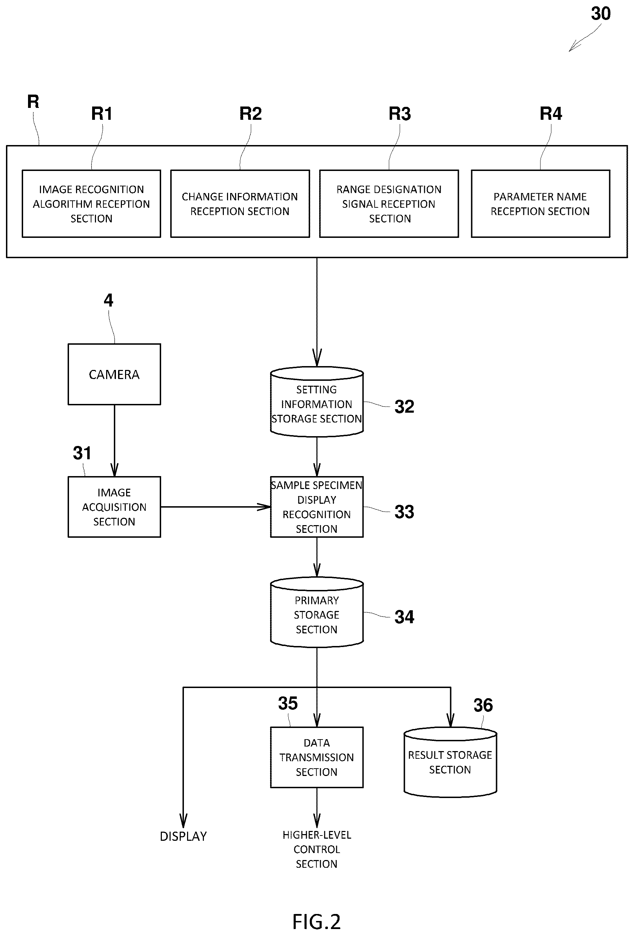

In this embodiment, the test specimen display recognition device 30 is a computer comprising a CPU, an internal memory, an input/output interface or an A/D converter, or the like. The test specimen display recognition device 30 performs functions, as shown in Fig. 2, as a setting information reception section (R), an image acquisition section 31, a setting information storage section 32, a test specimen display recognition section 33, a primary storage section 34, a data transmission section 35, and a result storage section 36 through cooperation of the CPU and its peripheral devices. The setting information reception section (R) and the setting information storage section 32 may be provided separately from the test specimen display recognition device 30. In this case, a device comprising the setting information reception section (R) and the setting information storage section 32 is referred to as a test specimen display setting device.

In this embodiment, the test specimen display (H) is an indicator that appears on the meter panel (M) and indicates the state of the test specimen (W). Concretely, the test specimen display (H) is at least one of the followings.

A circle meter that indicates a circumferentially arranged scale (for example, a speedometer or an engine tachometer, or the like).

A bar meter that indicates a scale arranged in a straight or curved line (for example, a battery level gauge or a fuel level gauge, or the like).

A character that indicates the state of the test specimen (W) (for example, a character indicating a driving mode of the test specimen (W), a total distance traveled, air conditioner temperature setting, or an outdoor air temperature, or the like).

A graphics that indicates the state of the test specimen (W) (for example, a distance between the test specimen (W) and the vehicle in front, status indication (enabled, disabled and standby) of AD/ADAS function, target distance setting, target speed setting, brake pressure recommendation, or steering wheel operation recommendation, or the like).

A warning light that indicates abnormalities of the test specimen (W) (for example, a water temperature warning light, a gasoline level warning light, a battery warning light, an AT fluid warning light, an oil pressure warning light, a fuel filter warning light, an ABS warning light, a hybrid system warning light, an engine abnormality warning light, an exhaust gas temperature abnormality warning light, a brake warning light, an airbag warning light, a seat belt warning light, an anti-skid device operation indicator light, a half-door warning light, or a washer fluid level warning light, or the like).

An indicator lights that indicates the state of the test specimen (W) (for example, a direction indicator light, a head lamp up indicator light, a tail lamp indicator light, a fog lamp indicator light, a high beam assist indicator light, a VDC OFF indicator light, a security indicator light, a low water temperature indicator light, a drivable indicator light, an EV indicator light, or a vehicle approach warning sound temporary stop indicator lights, or the like).

The image acquisition section 31 acquires an image captured or recorded by the camera 4. In this embodiment, the image acquisition section 31 acquires the image of the meter panel (M) captured by the camera 4. The image acquired by the image acquisition section 31 can be displayed on a display section, for example, a display (D).

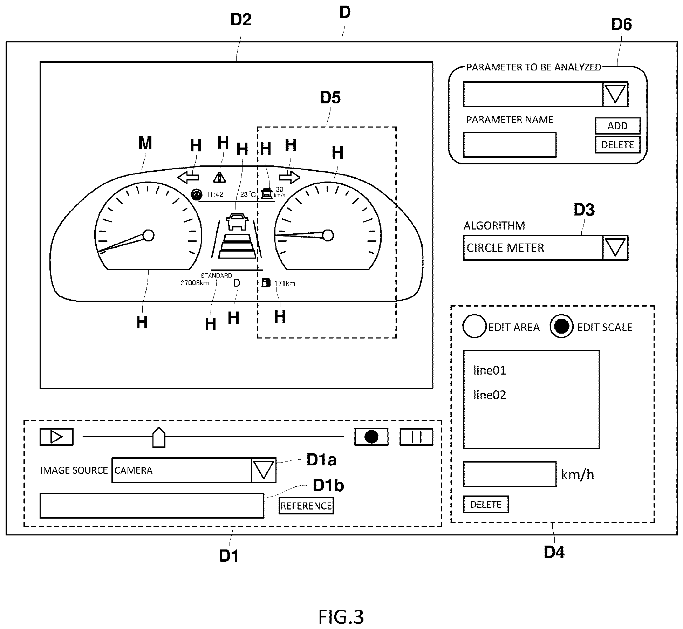

With referring to Fig. 3, the display (D) is provided with an image selection area D1 for selecting an image and/or a display area D2 where the image selected in the image selection area D1 is displayed. The image selection area D1 is provided with an image source selection area D1a that selects an image source indicating a medium on which the image is captured, and/or an image file selection area D1b that indicates a storage location of the image file. In this embodiment, when a user selects the camera 4 as the image source from the image source selection area D1a, the image of the meter panel captured by camera 4 is displayed in the display area D2. In addition, the user may also select a recorded image from the image source selection area D1a and select a storage location for the recorded image in the image file selection area D1b.

The setting information reception section (R) receives information (hereinafter referred to as "setting information") that is set to recognize the test specimen display (H). In this embodiment, the setting information includes, for example, a parameter name, a type of an image recognition algorithm, an area to be analyzed, a threshold value, and/or a transmission order, however, it is not necessarily limited to this. The setting information received by the setting information reception section (R) is then stored in the setting information storage section 32.

The setting information reception section (R) functions as an image recognition algorithm reception section R1 that accepts a selection signal, which is a signal indicating an image recognition algorithm selected by a user from multiple image recognition algorithms. In this embodiment, an algorithm selection area D3 is provided on the display (D) to make it possible to select any image recognition algorithm from the multiple image recognition algorithms. When a user selects an image recognition algorithm from the algorithm selection area D3 through an input means such as, for example, a touch panel, a mouse or a keyboard, the selection signal is output based on the selected image recognition algorithm. The image recognition algorithm reception section R1 accepts the output selection signal and stores the selection signal in the setting information storage section 32.

In this embodiment, the image recognition algorithm is an algorithm for recognizing the test specimen display (H) from the image of the meter panel (M). More concretely, the image recognition algorithm is to specify a type of the test specimen display (H) based on the image of the meter panel (M). In addition, the multiple image recognition algorithms can be, for example, at least one of an algorithm for recognizing a circle meter, an algorithm for recognizing a bar meter, an algorithm for recognizing a character and pattern matching.

Concrete examples of the image recognition algorithm are shown as follows.
(1) Circle meter: An algorithm for recognizing a circle meter that indicates a circumferentially arranged scale (Fig. 3 is a state wherein this algorithm "circle meter" is selected.)
(2) Bar meter: An algorithm for recognizing a bar meter that indicates a scale arranged in a straight line or a curved line.
(3) Character recognition: An algorithm such as optical character recognition (OCR) for recognizing a character based on the image of the meter panel (M).
(4) Pattern matching: An algorithm such as pattern matching for recognizing the lighting of a graphic, warning or indicator light based on an image of the meter panel (M).

Furthermore, the setting information reception section (R) functions as a change information reception section R2 that receives change information, which is information for recognizing a change in the state of the test specimen display (H). The change information reception section R2 receives the change information and stores the change information in the setting information storage section 32.

Concretely, the change information is received by the change information reception section R2 when the user inputs the information into an editing area D4 through the input means. In this embodiment, the following can be listed as the change information.
(1) In case that the test specimen display (H) is a circle meter, the change information is the information for recognizing changes in the state of the circle meter. The change information can be at least one of a center of the circle meter, a scale such as the maximum value or the minimum value, a position of the scale such as the maximum value or the minimum value, a value for scaling and a threshold value related to edge or line segment extraction.
(2) In case that the test specimen display (H) is a bar meter, the change information is information for recognizing changes in a state of the bar meter. The change information can be at least one of a shape of the bar meter such as linear or curved, a scale such as the maximum value or the minimum value, the position of the scale such as the maximum value or the minimum value, a value for scaling and a threshold value.
(3) In case that the test specimen display (H) is a character, the change information can be at least one of character information such as an alphabet, a number, an area, or the maximum value or the minimum value for determining an abnormal value, or information for recognizing the change in a state of the character information (including at least the change in a state in case that the character is displayed and the character is not displayed).
(4) In case that the test specimen display (H) is a graphic, the change information can be at least one of graphic information such as an area, registration of template image, threshold for similarity determination, an output value by similarity, or graphic information such as selection between gray scale and color scale and information for recognizing the change in a state of the graphic information (including at least the change in a state in case that the graphic is displayed and the graphic is not displayed).

Furthermore, the setting information reception section (R) functions as a range designation signal reception section R3 that receives a range designation signal indicating a range of an image specified by the user. The range designation signal reception section R3 receives the range designation signal and stores the range designation signal in the setting information storage section 32. In this embodiment, a range designation area D5, which specifies the range of the image to which the selected image recognition algorithm is applied, can be designated by the user on the display (D) through the input means. When the user designates the range designation area D5, the range designation signal reception section R3 receives the range designation signal indicating that the range designation area D5 has been designated. Even after the range designation signal is received by the range designation signal reception section R3, it is possible for the user to modify the range designation area D5. In this case, the setting information storage section 32 stores the range designation signal based on the modified range designation area D5.

Furthermore, the setting information reception section (R) may function as a parameter name reception section R4 that accepts the names of parameters to be analyzed. In this embodiment, a parameter designation area D6 in which the user specifies the parameter to be analyzed through the input means is displayed on the display (D). When the user inputs a parameter to be analyzed in the parameter designation area D6, the parameter name reception section R4 receives the parameter to be analyzed and stores it in the setting information storage section 32. At this time, the parameter to be analyzed is tied to the image recognition algorithm, the range specification signal, and/or the change information and stored in the setting information storage section 32 as the setting information.

The test specimen display recognition section 33 recognizes the indicated value indicated by the test specimen display (H) based on the setting information stored in the setting information storage section 32. In this embodiment, the test specimen display recognition section 33 acquires the setting information stored in the setting information storage section 32 and recognizes the indicated value indicated by the test specimen display (H) on the meter panel (M) based on the setting information and the image recognition algorithm according to the setting information.

Concretely, the test specimen display recognition section 33 recognizes the test specimen display (H) using one or more image recognition algorithms, as shown below.
(1) The test specimen display recognition section 33 detects the edge that passes near a center of the range designation area D5 and differentiates it into lines and calculates its angle by using the image recognition algorithm of the circle meter. Then the calculated angle is converted to a value from the scale of the pre-set circle meter. In this embodiment, the test specimen display recognition section 33 recognizes a value (an indicated value) indicated by a needle of the circle meter from a scale of the pre-set circle meter and a value for scaling by recognizing the position of the maximum value and the minimum value of the circle meter and by recognizing the position or the angle of the circle meter between the maximum value and the minimum value. In order to improve accuracy, the test specimen display recognition section 33 may set an additional scale or a value located between the maximum value and the minimum value.
(2) The test specimen display recognition section 33 recognizes the position of the bar meter or the indicated scale or the value in the range designation area D5 using the image recognition algorithm of the bar meter. In this embodiment, the test specimen display recognition section 33 recognizes the scale or the value indicated by a bar of the bar meter by recognizing the position of the maximum value and the position of the minimum value of the bar meter and by recognizes the position of a bar of the bar meter between the maximum value and the minimum value. In order too improve accuracy, the test specimen display recognition section 33 may recognize an additional scale or the value located between the maximum value and the minimum value.
(3) In case that the image recognition algorithm is character reading, the test specimen display recognition section 33 uses, for example, OCR to recognize the characters (indicated values) contained in the range designation area D5.
(4) In case that the image recognition algorithm is figure identification, the test specimen display recognition section 33 uses, for example, pattern matching to recognize figures, warning lights or indicator lights (indicated values) that are lit in the range designation area D5.

The primary storage section 34 temporarily stores the recognized results of the test specimen display (H) recognized by the test specimen display recognition section 33. In this embodiment, to store temporarily means that the recognized result of the test specimen display (H) is stored in a predetermined memory of the test specimen display recognition device 30 during a period after the test specimen display recognition section 33 recognizes the test specimen display (H) until it is output to the control device 20 and/or the display (D).

The data transmission section 35 transmits the recognized results stored in the primary storage section 34 to the higher-level control section 23.

The result storage section 36 stores the recognized results in the predetermined memory of the test specimen display recognition device 30 when the data transmission section 35 sends the recognized results to the higher-level control section 23. The primary storage section 34 and the result storage section 36 may be the same storage section. In addition, the recognized results stored in the result storage section 36 may be displayed on the display (D).

### < Test specimen display recognition method >

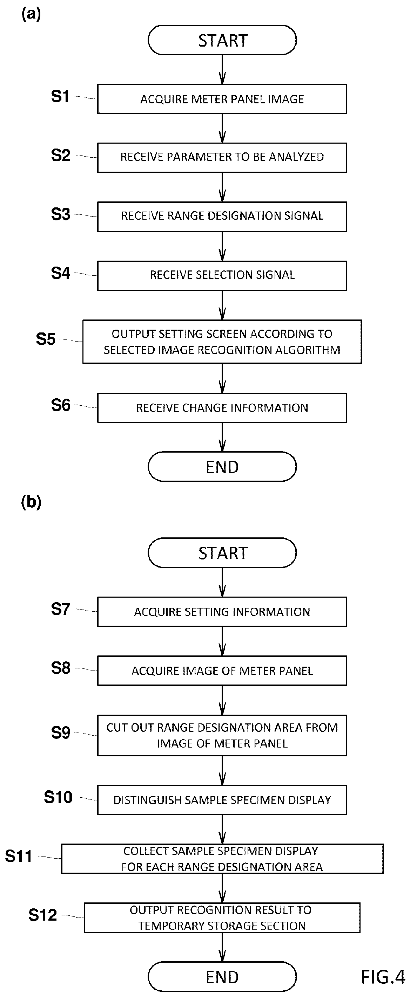

Next, the setting method for recognizing the indicated value indicated by the test specimen display (H) using the test specimen display recognition device 30 of this embodiment will be explained with reference to Fig. 4(a).

### (1) Setting setup information

First, the image acquisition section 31 acquires the image of the meter panel through the camera 4 and outputs the image data to the display (D) (S1). The image acquisition section 31 may acquire the image or video stored in advance.

When the user inputs a parameter to be analyzed in the parameter designation area D6, the parameter name reception section R4 receives the parameter to be analyzed and stores it in the setting information storage section 32 (S2).

When the user designates the range designation area D5, the range designation signal reception section R3 receives the range designation signal and stores it in the setting information storage section 32 (S3).

The user selects the image recognition algorithm in the algorithm selection area D3. As a result of this, the image recognition algorithm reception section R1 receives the selection signal and stores it in the setting information storage section 32 (S4).

The setting screen according to the selected image recognition algorithm is displayed in the display (D) (S5). This makes it possible for the user to input the change information in the editing area D4, and the change information reception section R2 receives the change information and stores it in the setting information storage section 32 (S6). The order of S1 to S6 may be interchanged.

Next, the test specimen display recognition method using the test specimen display recognition device 30 of this embodiment will be explained with reference to Fig. 4(b).

### (2) Discrimination of test specimen display (H)

The test specimen display recognition section 33 acquires the setting information stored in the setting information storage section 32 (S7).

The image acquisition section 31 acquires the image of the meter panel (M) captured by the camera 4 (S8). The image acquisition section 31 may acquire the image data captured by the camera 4 and stored in advance.

The test specimen display recognition section 33 acquires the range designation signal stored in the setting information storage section 32 and cuts out the range designation area D5 from the image of the meter panel (M) (S9).

The test specimen display recognition section 33 acquires the selection signal and the change information from the setting information storage section 32. Then, the test specimen display recognition section 33 analyzes the image in the range designation area D5 and recognizes the indicated value indicated by the test specimen display (H) based on the image recognition algorithm corresponding to the selection signal and the change information (S10).

The test specimen display recognition section 33 collects the indicated values output for each of the range designation areas D5 (S11).

The test specimen display recognition section 33 stores the collected indicated values in the primary storage section 34 (S12).

### <Test specimen testing method>

Next, the test specimen testing method using the test specimen testing system 100 of this embodiment will be explained. In this test specimen testing method, the test specimen (W) indicates an example of an AD/ADAS vehicle, however, it is not limited to the AD/ADAS vehicle.

First, the test specimen (W) is placed on a dynamometer 11. In addition, a predetermined driving pattern is set using the control device 20. This predetermined driving pattern includes a setting vehicle speed pattern of the test specimen (W), setting road surface information including a road surface gradient, setting a position of the vehicle in front and the speed pattern of the vehicle in front, and/or setting the various parameters of the AD/ADAS vehicle in the test specimen (W).

Once the predetermined driving pattern is set, the test of the test specimen (W) is executed. By executing the test, the higher-level control section 23 sends a signal to the camera 4 to start capturing images of the meter panel (M) and also starts controlling the dynamometer 11 or the autonomous driving robot 12 respectively through the load control section 21 or the robot control section 22. Concretely, the higher-level control section 23 instructs the robot control section 22 to operate the test specimen (W), and the robot control section 22 controls the autonomous driving robot 12 to operate the test specimen (W). In addition, a load may also be applied to the test specimen (W) by a load device 112.

The camera 4 sends the images taken of the meter panel (M) to the test specimen display recognition device 30 in real time. The test specimen display recognition device 30 recognizes the state of the test specimen (W) by recognizing the test specimen display (H) from the images captured by the camera 4. The higher-level control section 23 may control the robot control device 22 so that the autonomous driving robot 12 performs various operations based on the meter display contents such as brake press instruction or restart instruction from the vehicle during driving by, for example, adaptive cruise control.

### <Effect of this embodiment>

According to the test specimen display recognition device 30 of this embodiment having this configuration, it is possible for the user to select the image recognition algorithm that is tailored to each test specimen display (H) of the meter panel (M). Then, since the test specimen display recognition section 33 recognizes the test specimen display (H) using the selected image recognition algorithm, each test specimen display (H) of the meter panel (M) can be easily recognized. In addition, in this embodiment, since each test specimen display (H) of the meter panel (M) is recognized individually, there is no need of using an image of the meter panel (M) in a state wherein all of the test specimen display (H) is lit like a conventional configuration so that it is possible to prevent misrecognition or omission of discrimination of the test specimen display (H).

In accordance with this embodiment, since the setting information is used to discriminate the test specimen display (H), it is possible to recognize the test specimen display (H) more easily.

In accordance with this embodiment, since the test specimen display recognition device 30 uses the image recognition algorithm in the range designation area D5, it is possible to recognize the indicated values of the test specimen display (H) more accurately than in a case that the image recognition algorithm is used over the entire range of the image.

### <Other embodiments>

This invention is not limited to the above-mentioned embodiments.

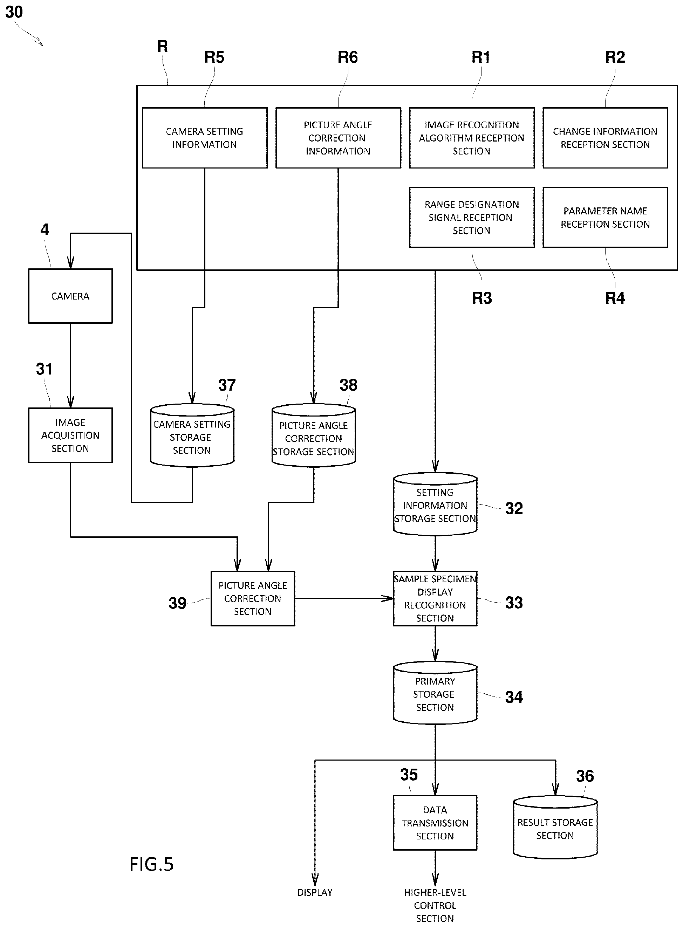

For example, as shown in Fig. 5, the setting information reception section (R) may be configured to function as a camera setting information reception section R5 that further receives camera setting information, which is information on setting of camera 4. In this case, the test specimen display recognition section 33 may comprise a camera setting storage section 37 that stores the camera setting information received by the camera setting information reception section R5 and an image correction section 39 that corrects images captured by the camera 4 set based on the camera setting information. In this embodiment, the camera setting information is parameters, which are set manually or automatically in case of imaging with the camera 4, such as an aperture value, a shutter speed, an exposure time, white balance and/or ISO sensitivity, or the like.

In accordance with this configuration, since the test specimen display recognition section 33 recognizes the test specimen display (H) based on the image corrected by the image correction section 39, it is possible for the test specimen display recognition section 33 to accurately recognize the state of the test specimen display (H) regardless of the environment surrounding the meter panel.

In addition, as shown in Fig. 5, the setting information reception section (R) may be configured to function as a picture angle correction reception section R6 that receives picture angle correction information, which is information on an amount of correction to correct the picture angle of the camera 4. In this case, the test specimen display recognition device 30 may further comprises a picture angle correction storage section 38 that stores the picture angle correction information received by the picture angle correction reception section R6 and an image correction section 39 that corrects the picture angle of the camera 4 based on the picture angle correction information stored in the picture angle correction storage section 38. The image correction section 39 that corrects images captured by the camera 4 set based on the camera setting information and the image correction section 39 that corrects the picture angle of the camera 4 based on the picture angle correction information stored in the picture angle correction storage section 38 may be the same correction section or may be different correction sections.

Concretely, as shown in Fig. 5, in case of setting the camera 4, the picture angle correction reception section R6 receives the picture angle correction information and stores it in the picture angle correction storage section 38. The image correction section 39 corrects the picture angle of the image captured by camera 4 based on the picture angle correction information stored in the picture angle correction storage section 38. For the picture angle correction information, a reference image as being a reference (for example, a reference image that is an image of the test specimen display (H) acquired in case of setting the setting information) can be used.

In accordance with this configuration, in case that the camera 4 is replaced or in case that multiple test specimens of the same type are tested, it is possible to omit a process of setting the indicated value for recognizing the indicated value indicated by the test specimen display (H) just by setting up once to recognize the test specimen display (H) and then adjusting a picture angle or image distortion, a size, a position, and/or an angle of the camera 4.

Furthermore, in the case shown in Fig. 5, the picture angle correction storage section 38 may store at least first picture angle correction information and second picture angle correction information, which is picture angle correction information with a smaller correction amount than the first picture angle correction information. In this case, immediately after the test specimen display recognition section 33 starts recognizing the test specimen display (H), the image correction section 39 acquires the first picture angle correction information from the picture angle correction storage section 38 and corrects the picture angle based on the first picture angle correction information.

On the other hand, while the test specimen display recognition section 33 is recognizing the test specimen display (H), the image correction section 39 acquires the second picture angle correction information from the picture angle correction storage section 38 and corrects the picture angle based on the second picture angle correction information.

In accordance with this configuration, in case that the picture angle changes significantly such that, for example, when a camera is replaced, the picture angle is corrected based on the first picture angle correction. In case that there is an intermittent small change in the picture angle such that when the test specimen display is vibrating while the test specimen display is running, the picture angle is corrected based on the second picture angle correction information. As a result, since the picture angle correction information is changed in response to the magnitude of the correction amount, it is possible to accurately correct the picture angle regardless of the magnitude of the correction amount.

Furthermore, the test specimen display recognition device 30 may further comprise a processing process output section (not shown in drawings) that outputs a processing process of the parameter to be analyzed to the display section.

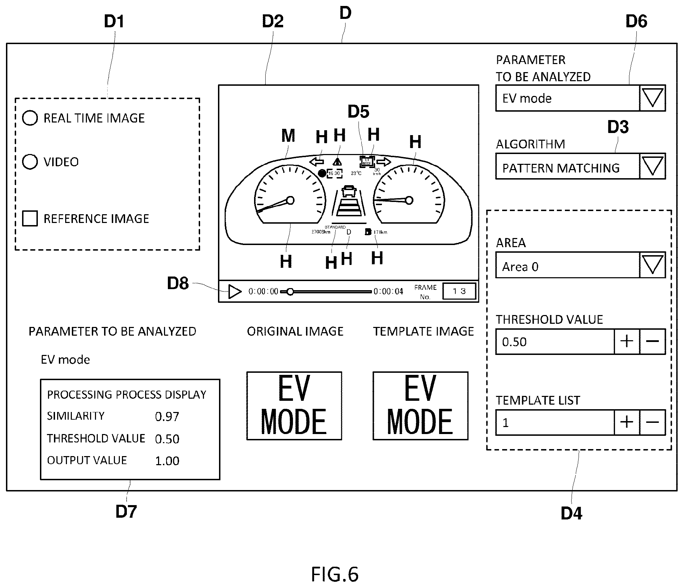

Fig. 6 shows an example of the display (D) on which setting up is conducted to recognize the figure displayed in the range designation area D5 in case that the pattern matching is selected as the image recognition algorithm. In this case, the change information includes a threshold value (for example, a threshold value of similarity with a template image) and template image selected by a user, and the change information is input to the editing area D4. In addition, a processing process confirmation window D7 to confirm the processing process is shown on the left side of the display (D).

The processing process output section displays the similarity in the image of the meter panel (M), the set threshold value and the output value in the range designation area D5. In case that the similarity exceeds the threshold value, the processing process output section outputs an output value (for example, a number such as 1.00) indicating that the similarity exceeds the threshold value. On the other hand, in case that the similarity is below the threshold value, the process output section outputs an output value (for example, a number such as 0) indicating that the similarity does not exceed the threshold value.

In accordance with this configuration, it is possible for the user to check whether the test specimen display recognition section 33 is able to recognize the test specimen display according to the predetermined process.

Furthermore, the test specimen display recognition device 30 may further comprise a mask processing section (not shown in drawings) that performs mask processing to mask a predetermined area (G) selected by the user from the captured image of the meter panel (M).

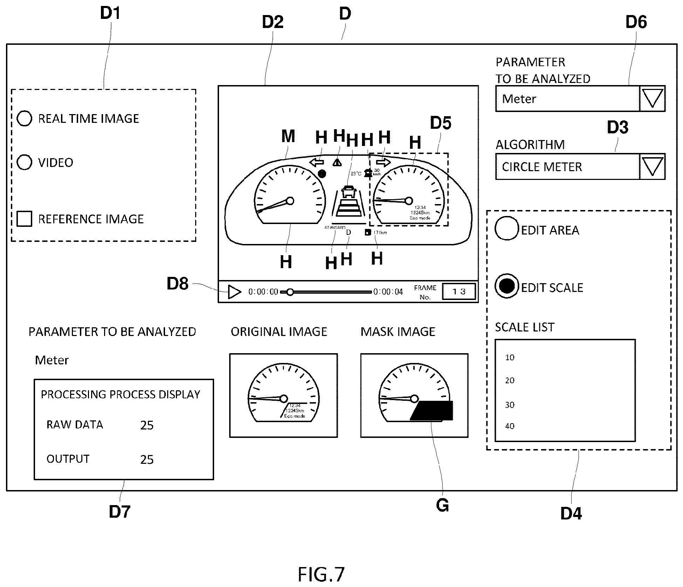

An example shown in Fig. 7 shows the display (D) that performs the mask processing on the original image of a captured circle meter in case of setting up to recognize the indicated value indicated by the circle meter. As shown in Fig. 7, the original image may display information that the test specimen display recognition section 33 misrecognizes as the indicated value of the circle meter in case of recognizing the indicated value of the circle meter, such as a needle of the circle meter, a scale of the circle meter and the center of the circle meter, as well as line segments displayed on the circle meter.

Then the user selects the predetermined area (G) where the information that is misrecognized as the indicated value by the test specimen display recognition section 33 in case that the test specimen display recognition section 33 recognizes the indicated value of the circle meter. When the user selects the predetermined area (G), as shown in Fig. 7, the mask image wherein the predetermined area (G) is masked is displayed on the display (D). The test specimen display recognition section 33 recognizes the areas other than the masked predetermined area (G) among the mask image in case of recognizing the indicated value indicated by the circle meter more accurately.

In accordance with this configuration, in case that the test specimen display recognition section 33 recognizes the indicated value of the test specimen display (H), since the test specimen display recognition section 33 recognizes the test specimen display (H) in an area other than the mask-processed predetermined area (G), it is possible to exclude the information that is misrecognized in case that the test specimen display recognition section 33 recognizes the indicated value of the test specimen display (H) from the analysis target. As a result of this, it is possible for the test specimen display recognition section 33 to recognize the indicated value of the test specimen display (H) more accurately.

Furthermore, the test specimen display recognition device 30 may further comprise a recording and replaying section (not shown in drawings) that records the image captured by the camera 4 and plays the captured image back on the display section in a state wherein the test specimen display recognition section 33 does not recognize the test specimen display (H).

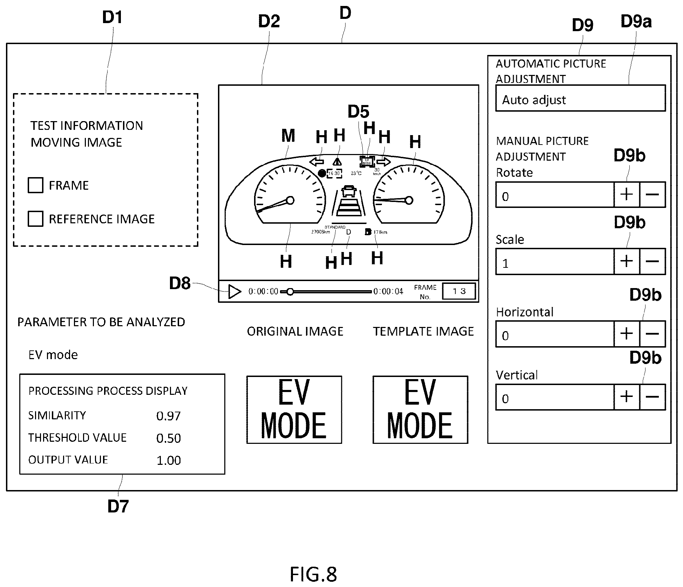

In an example shown in Fig. 8, the display (D) shows a recording playback instruction area D8 where the user instructs the recording playback section to replay or stop the recorded video image through the input means. As shown in Fig. 8, when the recording playback section is instructed to replay the recorded video image, the recorded video image is replayed by outputting the recorded video image to the display area D2. At this time, the recording playback section may display an indication value that recognizes the test specimen display (H) included in the replayed video image.

In addition, the test specimen display recognition device 30 may further comprise a superimposition section (not shown in drawings) that superimposes the reference image of the meter panel (M) and the captured image of the meter panel (M) on the display (D). It is possible for the user to determine whether or not the picture angle correction process related to the first picture angle correction information is required based on the misalignment of the superimposed reference image and the captured image.

Referring to Fig. 8, the picture angle correction process is performed using a picture angle adjustment menu D9 on the display (D). Automatic picture angle adjustment D9a, which automatically performs the picture angle correction process, and manual picture angle adjustment D9b, which manually performs the picture angle correction process are displayed on the picture angle adjustment menu D9 and can be selected by the user. It is possible to adjust, for example, a rotation angle, a scale value, a horizontal movement distance and/or a vertical movement distance of the camera 4 by the manual picture angle adjustment D9b.

In accordance with this configuration, since the reference image and the captured image are superimposed and displayed on the display (D), it becomes easier for the user to recognize the deviation between the captured image and the reference image and to correct the picture angle of the captured image automatically or manually.

In this embodiment, the image acquisition section 31 acquires the images captured by the camera 4, however, the image acquisition section 31 may also acquire images captured or recorded by other media. The image acquisition section 31 may also acquire still images or video.

In this embodiment, the test specimen display recognition device 30 is provided separately from the control device 20, however, the test specimen display recognition device 30 may be provided on the same computer as the control device 20, or some functions of the test specimen display recognition device 30 may be incorporated into the control device 20.

In this embodiment, the test specimen testing system 100 comprises the autonomous driving robot 12, however, the test specimen testing system 100 does not have to comprise an autonomous driving robot 12 and the user may drive the vehicle.

In this embodiment, the test specimen testing system 100 comprises the dynamometer 11, however, the test specimen testing system 100 does not have to comprise a dynamometer 11 and may be used for the test specimen (W) that is driven on a road or a test course.

In this embodiment, the test specimen display recognition device 30 produces functions as the image acquisition section 31, the setting information storage section 32, the test specimen display recognition section 33, the primary storage section 34, the data transmission section 35 and the result storage section 36, however, the test specimen display recognition device 30 may produce only functions as at least the setting information storage section 32 and the test specimen display recognition section 33. In addition, in order to easily set the image recognition algorithm according to the test specimen display (H) and to accurately recognize the test specimen display (H) on the meter panel (M), the setting information storing section 32 may at least accept and store a selection signal.

The specimen display recognition device 30 of this embodiment comprises the test specimen display recognition section 33, however, the specimen display recognition device of other embodiments may be a test specimen display setting device that conducts setting to read the indicated value of the test specimen display (H) without the test specimen display recognition device 33. The test specimen display setting device may comprise a setting information reception section (R) that receives a selection signal indicating the type of the image recognition algorithm for recognizing the type of specimen display (H) from the image, and a setting information storage section 32 that stores the setting information received by the setting information reception section (R). In accordance with this configuration, since the setting information reception section (R) receives the setting information and stores the setting information in the setting information storage section 32, the user only needs to make the setting once to recognize the indicated value of the test specimen display (H), thereby reducing the user's effort during the setting.

Various other modifications and combinations of the embodiments may be made without departing from a spirit of this invention.

### Possible applications in industry

In accordance with this invention, it is possible to easily set the image recognition algorithm according to the test specimen display to be recognized, and to accurately recognize the test specimen display on the meter panel.

### [Description of Signs].

- 100: test specimen testing system
- 10: test facility
- 20: control device
- R: setting information reception section
- R1: image recognition algorithm reception section
- R2: change information reception section
- R3: range designation signal reception section
- R4: parameter name reception section
- R5: camera setting information reception section
- R6: picture angle correction information reception section
- 30: test specimen display recognition device
- 31: image acquisition section
- 32: setting information storage section
- 33: test specimen display recognition section
- 34: primary storage section
- 35: data transmission section
- 36: result storage section
- 37: camera setting storage section
- 38: picture angle correction storage section
- 39: image correction section
- 4: camera
- W: test specimen
- H: test specimen display
- M: meter panel

## Claims

1. A test specimen display recognition device that recognizes a test specimen display to indicate a state of a test specimen from an image of a meter panel of the test specimen, which is a vehicle or a part of the vehicle, captured by a camera, comprising
a setting information reception section that receives a selection signal indicating a type of an image recognition algorithm to recognize the test specimen display from the image,
a setting information storage section that stores the selection signal received by the setting information reception section as the setting information, and
a test specimen display recognition section that acquires the setting information from the setting information storage section and recognizes an indicated value indicated by the test specimen display based on the setting information.

2. The test specimen display recognition device described in claim 1, wherein
the setting information reception section receives change information, which is information for recognizing a change in a state of the test specimen display, and stores the change information in the setting information storage section as the setting information, and
the test specimen display recognition section acquires the setting information from the setting information storage section and recognizes the indicated value indicated by the test specimen display based on the image recognition algorithm and the change information.

3. The test specimen display recognition device described in claim 2, wherein
the setting information reception section receives information for recognizing the change in a state of a bar meter, a circle meter, character information, and/or graphic information as the change information, and
the test specimen display recognition section acquires the setting information from the setting information storage section and recognizes the indicated value indicated by the test specimen display based on the image recognition algorithm and the change information.

4. The test specimen display recognition device described in either one of claim 1 through 3, wherein
the setting information reception section receives a range designation signal indicating a range of the image specified by a user and stores the range designation signal in the setting information storage section, and
the test specimen display recognition section recognizes the indicated value indicated by the test specimen display included in the range by using the image recognition algorithm.

5. The test specimen display recognition device described in either one of claim 1 through 4, wherein
the test specimen display is at least one or more of a circle meter, a bar meter, a character and a graphic.

6. The test specimen display recognition device described in either one of claim 1 through 5, wherein
the setting information reception section receives picture angle correction information, which is information for correcting a picture angle of the camera, and
the test specimen display recognition device further comprises,
a picture angle correction storage section that stores the picture angle correction information received by the setting information reception section, and
an image correction section that corrects the picture angle based on the picture angle correction information stored in the picture angle correction storage section.

7. The test specimen display recognition device described in claim 6, wherein
the picture angle has at least first picture angle correction information, which is one of the picture angle correction information, and second picture angle correction information, which is picture angle correction information whose correction amount is smaller than that of the first picture angle correction information, and
the image correction section corrects the picture angle based on the first picture angle correction information immediately after the test specimen display recognition section starts recognizing the test specimen display and corrects the picture angle based on the second picture angle correction information while the test specimen display recognition section is recognizing the test specimen display.

8. The test specimen display recognition device described in either one of claim 1 through 7, further comprising
a mask processing section that performs mask processing to mask a predetermined area selected by a user from the captured image of the meter panel.

9. A test specimen testing system for testing a test specimen, which is a vehicle or a part of the vehicle, comprising
a test facility that tests the test specimen,
a camera that captures an image of a meter panel of the test specimen,
the test specimen display recognition device described in either one of claims 1 through 8, and
a control device that controls the test facility based on the test specimen display recognized by the test specimen display recognition device.

10. A test specimen display setting device that recognizes a test specimen display to indicate a state of a test specimen from an image of a meter panel of the test specimen, which is a vehicle or a part of the vehicle, captured by a camera, comprising
a setting information reception section that receives a selection signal indicating a type of an image recognition algorithm to recognize the test specimen display from the image, and
a setting information storage section that stores the selection signals received by the setting information reception section as setting information.

11. A test specimen display recognition method that recognizes a test specimen display indicating a state of a test specimen from an image of a meter panel of the test specimen, which is a vehicle or a part of the vehicle, captured by a camera, and comprising
receiving a selection signal indicating a type of an image recognition algorithm for recognizing the test specimen display from the image,
storing setting information including the received selection signal, and
recognizing an indicated value indicated by the test specimen display based on the setting information.

12. A test specimen display recognition program that is used for a test specimen display recognition device that recognizes a test specimen display indicating a state of a test specimen from an image of a meter panel of the test specimen, which is a vehicle or a part of the vehicle, captured by a camera and that makes a computer produce functions as
a setting information reception section that receives a selection signal indicating a type of an image recognition algorithm to recognize the test specimen display from the image,
a setting information storage section that stores the selection information that includes the selection signal received by the setting information reception section, and
a test specimen display recognition section that acquires the setting information from the setting information storage section and recognizes an indicated value indicated by the test specimen display based on the setting information.
